# EUROPÄISCHE PATENTSCHRIFT

(11) **EP 2 523 015 B1**
(45) Veröffentlichungstag und Bekanntmachung des Hinweises auf die Patenterteilung: **26.10.2016**
(21) Anmeldenummer: 12166527.7
(22) Anmeldetag: 03.05.2012
(51) Int. Cl.: G01S 7/527, G01S 15/93

(54) **Verfahren zum Ausblenden eines irrelevanten Objektes beim Detektieren eines Hindernisses, Fahrerassistenzeinrichtung und Kraftfahrzeug**
Method for hiding an irrelevant object when detecting an obstacle, driver assistance device and motor vehicle
Procédé de suppression d'un objet négligeable lors de la détection d'un obstacle, dispositif d'assistance au conducteur et véhicule automobile

(30) Priorität: 10.05.2011 DE 102011101013
(43) Veröffentlichungstag der Anmeldung: 14.11.2012
(73) Patentinhaber: Valeo Schalter und Sensoren GmbH, 74321 Bietigheim-Bissingen (DE)
(72) Erfinder: Hallek, Michael, 71717 Beilstein (DE); Grüdl, Dietmar, 71679 Asperg (DE); Jung, Thomas, 74074 Heilbronn (DE); Frischmann, Christian, 71642 Ludwigsburg (DE)

(56) Entgegenhaltungen:
- EP-A2- 1 296 159
- DE-A1- 19 805 515
- US-A1- 2002 084 930

## Beschreibung

Die Erfindung betrifft ein Verfahren zum Ausblenden eines irrelevanten Objektes beim Detektieren eines Hindernisses mittels eines nach dem Echolaufzeitprinzip arbeitenden Sensors einer Fahrerassistenzeinrichtung eines Kraftfahrzeugs. Es wird ein Sendesignal durch den Sensor zu einem Sendezeitpunkt gesendet, und ein Echo wird zu einem späteren Empfangszeitpunkt empfangen. Die Fahrerassistenzeinrichtung überprüft, ob der Empfangszeitpunkt innerhalb eines vorgegebenen Zeitfensters bezüglich des Sendezeitpunkts liegt. Die Erfindung betrifft außerdem eine Fahrerassistenzeinrichtung, welche zum Durchführen eines derartigen Verfahrens ausgebildet ist, wie auch ein Kraftfahrzeug mit einer solchen Fahrerassistenzeinrichtung.

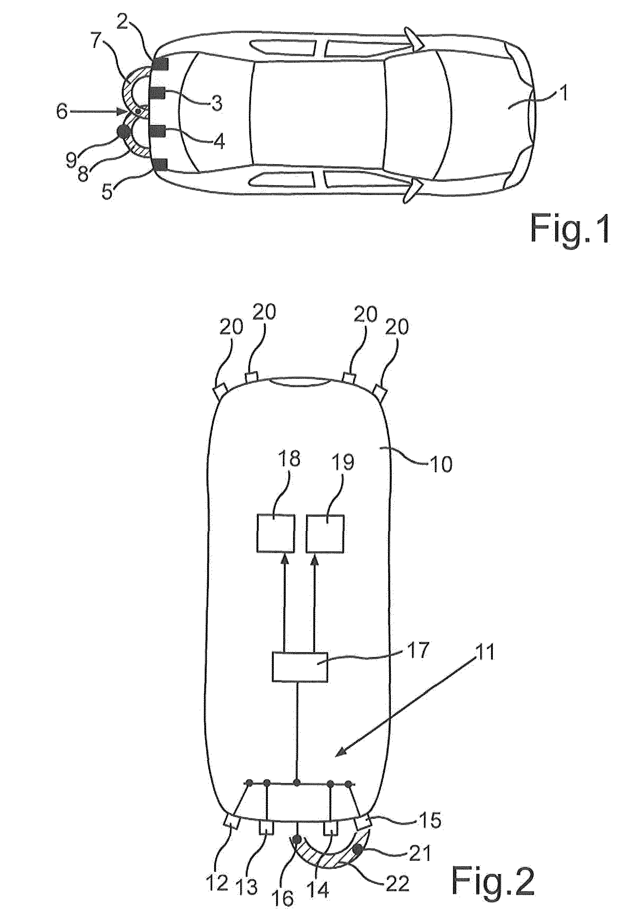

Vorliegend gilt das Interesse einer Einparkhilfe eines Kraftfahrzeugs, bei welcher Ultraschallsensoren zur Detektion von fahrzeugexternen Hindernissen eingesetzt werden. Ein Ultraschallsensor sendet bekanntlich ein Sendesignal, welches ein Schallsignal ist. Das Sendesignal reflektiert dann an Hindernissen und wird wieder durch den Ultraschallsensor empfangen, nämlich als ein Echo. Anhand des empfangenen Echos kann der Abstand zwischen dem Hindernis und dem Kraftfahrzeug bestimmt werden. Der Abstand wird dabei in Abhängigkeit von einer Laufzeit des Echos ermittelt, es wird hier eine Zeitdauer zwischen dem Sendezeitpunkt und dem Empfangszeitpunkt gemessen. Ein Problem kann sich ergeben, wenn fahrzeugfeste Objekte vorhanden sind, wie beispielsweise eine Anhängerkupplung. Eine solche Anhängerkupplung stellt aus Sicht des Sensors ein reales Objekt dar. Die Ultraschallwellen werden von der Anhängerkupplung reflektiert und vom Sensor empfangen. Diese Reflektion soll vorliegend erkannt und ausgeblendet werden, sodass nur noch relevante Objekte dem Fahrer angezeigt werden können. Im Stand der Technik erfolgt die Ausblendung in der Regel über zwei Methoden. Bei der ersten Methode wird die Empfangsempfindlichkeit für den Nahbereich drastisch herabgesetzt, sodass der Sensor das irrelevante Objekt nicht mehr erkennen kann. Bei der zweiten Methode werden alle Reflektionen in einem bestimmten Entfernungsbereich vom Kraftfahrzeug unterdrückt. Dies bedeutet, dass solche Reflektionen unterdrückt werden, die in einem vorgegebenen Zeitfenster empfangen werden, und zwar bezüglich des Sendezeitpunkts. Da ein Sensor radiale Abstandsinformationen zur Verfügung stellt, wird hier ein Entfernungsbereich in Form eines Kreisbogens ausgeblendet. Dies wird mit Bezug auf Fig. 1 näher erläutert: An einem hinteren Stoßfänger eines Kraftfahrzeugs 1 sind eine Vielzahl von Ultraschallsensoren 2, 3, 4, 5 angebracht. Am Kraftfahrzeug 1 ist außerdem eine Anhängerkupplung 6 angebracht. Diese Anhängerkupplung 6 wird durch die zwei mittleren Sensoren 3, 4 detektiert. Ausgeblendet wird hier jeweils ein Entfernungsbereich 7, 8, welcher die Form eines Kreisringes aufweist, in dessen Zeitraum sich der jeweilige Sensor 3, 4 befindet. Bei zwei beteiligten Sensoren 3, 4 fällt der Schnittpunkt der beiden kreisbogenförmigen Bereiche 7, 8 mit der Anhängerkupplung 6 zusammen.

Es kann jedoch vorkommen, dass sich in einem der ausgeblendeten Entfernungsbereiche 7, 8 ein reales Hindernis 9 befindet, wie in Fig. 1 dargestellt. Befindet sich das reale Hindernis 9 in einem gleichen radialen Abstand zum Sensor 4, wird auch dieses reale Hindernis 9 mit ausgeblendet, und das Hindernis 9 wird dem Fahrer nicht angezeigt. Diese Lücken können teilweise softwaretechnisch überbrückt werden, indem die Bewegung des Hindernisses 9 verfolgt und in dem ausgeblendeten Bereich 8 virtuell dargestellt wird. Allerdings basieren solche künstlichen Darstellungen auf einer Verfolgung bzw. einer Historie und funktionieren nicht, wenn die Historie nicht vorhanden ist, beispielsweise wenn das Kraftfahrzeug bereits in einer solchen Situation gestartet und nicht bewegt wird.

Ein Verfahren zum Detektieren von Objekten mithilfe eines Ultraschallsensors ist beispielsweise aus der Druckschrift DE 196 45 339 A1 bekannt. Es wird eine untere Schwelle für die Amplitude des Echos festgelegt, und ein zeitlicher Verlauf dieser Schwelle wird derart gestaltet, dass zwischen dem Echo der Anhängerkupplung und einem Bodenecho an dem Ultraschallsensor ankommende Echos erkannt werden können. Somit können dem Fahrer solche Hindernisse angezeigt werden, deren Echos zeitlich zwischen dem Echo der Anhängerkupplung und dem Bodenecho ankommen. Des Weiteren ist aus der US 2002/0084930 A1 ein Verfahren bekannt, um bei einem Objekterkennungssystem unnötige Information auszublenden. Dabei wird vor eine Benutzung des Systems in einer objektfreien Umgebung ein Grundrauschsignal aufgenommen. Bei der Benutzung des Systems werden dann alle Signale deren Amplitude unterhalb dieses Grundrauschsignals liegen von der Betrachtung ausgeschlossen. Das bekannte System definiert somit einen oberen Schwellwert, wobei alle Objekte als irrelevant ausgeschlossen werden, deren Signalamplitude unterhalb des Schwellwertes liegt.

Es ist Aufgabe der Erfindung, eine Lösung aufzuzeigen, wie bei einem Verfahren der eingangs genannten Gattung die irrelevanten Objekte besonders zuverlässig ausgeblendet werden können, sodass sie den Fahrer des Kraftfahrzeugs nicht angezeigt werden.

Diese Aufgabe wird erfindungsgemäß durch ein Verfahren mit den Merkmalen gemäß Patentanspruch 1, wie auch durch eine Fahrerassistenzeinrichtung mit den Merkmalen gemäß Patentanspruch 8 sowie durch ein Kraftfahrzeug mit den Merkmalen gemäß Patentanspruch 9 gelöst. Vorteilhafte Ausführungen der Erfindung sind Gegenstand der abhängigen Patentansprüche, der Beschreibung und der Figuren.

Ein erfindungsgemäßes Verfahren ist zum Ausblenden eines irrelevanten Objektes beim Detektieren eines Hindernisses mittels eines nach dem Echolaufzeitprinzip arbeitenden Sensors einer Fahrerassistenzeinrichtung eines Kraftfahrzeugs ausgelegt. Der Sensor sendet ein Sendesignal zu einem Sendezeitpunkt aus. Es wird ein Echo - also das reflektierte Sendesignal - durch den Sensor zu einem späteren Empfangszeitpunkt empfangen. Die Fahrerassistenzeinrichtung überprüft, ob der Empfangszeitpunkt innerhalb eines vorgegebenen Zeitfensters bezüglich des Sendezeitpunkts liegt oder nicht. Zusätzlich wird durch die Fahrerassistenzeinrichtung überprüft, ob ein vorbestimmtes Kriterium bezüglich einer Amplitude des Echos erfüllt ist oder nicht. Das empfangene Echo wird dann als zu dem irrelevanten Objekt gehörend interpretiert, wenn einerseits der Empfangszeitpunkt innerhalb des vorgegebenen Zeitfensters liegt und andererseits auch das auf die Amplitude bezogene Kriterium erfüllt ist.

Erfindungsgemäß wird somit durch die Fahrerassistenzeinrichtung überprüft, ob zwei separate Bedingungen bezüglich des empfangenen Echos erfüllt sind oder nicht, wobei gerade diese Kombination aus den beiden Bedingungen für eine zuverlässige Ausblendung irrelevanter Objekte sorgt: Einerseits wird überprüft, ob der Empfangszeitpunkt des Echos in das vordefinierte Zeitfenster bezüglich des Sendezeitpunkts fällt, also ob sich das Objekt in einem vorgegebenen Entfernungsbereich vom Sensor befindet oder nicht. Auf der anderen Seite wird zusätzlich auch überprüft, ob ein auf die Amplitude des Echos bezogenes vorbestimmtes Kriterium erfüllt ist oder nicht. Sind beide Bedingungen erfüllt, so kann das Echo dahingehend interpretiert werden, dass es von dem irrelevanten Objekt stammt, und nicht etwa von einem realen Hindernis. Mit anderen Worten wird das Echo als zu einem realen bzw. tatsächlichen Hindernis gehörend dann interpretiert, wenn eine der genannten Bedingungen nicht erfüllt ist. Anders als im Stand der Technik gemäß Fig. 1 können somit reale Hindernisse detektiert und angezeigt werden, die sich in dem vorgegebenen Entfernungsbereich vom Sensor befinden. Die Erfindung beruht dabei auf der Erkenntnis, dass das Echo einer Anhängerkupplung eine bestimmte Amplitude aufweist, die bei der Entwicklung der Fahrerassistenzeinrichtung ermittelt werden kann. Die Erfindung basiert ferner auf der Erkenntnis, dass reale Hindernisse - auch wenn sie sich im gleichen Abstand vom Sensor wie die Anhängerkupplung befinden - andere Reflexionseigenschaften besitzen und somit das von diesen Hindernissen reflektierte Echo eine andere Amplitude als die Amplitude des Echos der Anhängerkupplung aufweist. Das erfindungsgemäße Verfahren ermöglicht somit die Unterscheidung zwischen einer Anhängerkupplung einerseits und realen Hindernissen andererseits und sorgt somit für eine zuverlässige Ausblendung der Anhängerkupplung.

Es ist bevorzugt ein Ultraschallsensor, auf welchen das Verfahren angewandt wird.

Bevorzugt ist die Fahrerassistenzeinrichtung ein Parkhilfesystem, mittels welchem der Fahrer beim Einparken des Kraftfahrzeugs in eine Parklücke sowie beim Ausparken unterstützt wird. Das Parkhilfesystem kann beispielsweise so ausbildet sein, dass mittels des Sensors ein Abstand zwischen dem Kraftfahrzeug und einem fahrzeugexternen Hindernis gemessen und der Fahrer über diesen Abstand informiert wird. Zum Beispiel wird hier ein akustisches Signal und/oder eine Anzeige auf einer optischen Anzeigeeinrichtung erzeugt.

Als Empfangszeitpunkt wird bevorzugt ein Zeitpunkt definiert, zu welchen ein Maximum des Echos empfangen wird. Somit wird durch die Fahrerassistenzeinrichtung überprüft, ob der Zeitpunkt des Empfangens des Maximums in das vorgegebene Zeitfenster fällt oder nicht. Das Echo einer Anhängerkupplung besitzt nämlich in der Regel ein Maximum, welches ohne viel Aufwand durch die Fahrerassistenzeinrichtung ausgewertet werden kann.

Also wird durch die Fahrerassistenzeinrichtung überprüft, ob das auf die Amplitude bezogene Kriterium erfüllt ist oder nicht. Folgendes Kriterium wird erfindungsgemäß angewandt: Die Fahrerassistenzeinrichtung überprüft, ob die maximale Amplitude des Echos - also sein Maximum - innerhalb eines vorgegebenen Wertebereiches liegt, welcher durch einen unteren Schwellwert (größer Null) und einen vom ersten Schwellwert unterschiedlichen (größeren) zweiten Schwellwert (kleiner unendlich) definiert wird. Also überprüft die Fahrerassistenzeinrichtung in dieser Ausführungsform, ob die maximale Amplitude des empfangenen Echos größer als der untere Schwellwert und kleiner als der obere Schwellwert ist. Ist dies der Fall und fällt der Empfangszeitpunkt außerdem in das vorbestimmte Zeitfenster, so wird das empfangene Echo dahingehend interpretiert, dass es von dem irrelevanten Objekt stammt. Dieses Echo wird dann ausgeblendet, und das Objekt wird dem Fahrer nicht angezeigt. Somit kann das irrelevante Objekt besonders zuverlässig und präzise ausgeblendet werden, weil das Echo eines solchen Objektes stets eine maximale Amplitude aufweist, die in den vorgegebenen Wertbereich fällt. Auf der anderen Seite können auch reale Hindernisse zuverlässig detektiert werden, wenn der Abstand zwischen dem unteren und dem oberen Schwellwert relativ gering gewählt wird.

Der untere Schwellwert und/oder der obere Schwellwert kann/können in Abhängigkeit von einer Amplitude des Sendesignals definiert werden. Dem liegt der Gedanke zugrunde, dass die Amplitude des empfangenen Echos nicht nur von den Reflexionseigenschaften der Objekte abhängt, sondern auch von der Amplitude des Sendesignals. Dies kann berücksichtigt werden, indem der untere Schwellwert und/oder der obere Schwellwert auf der Basis der Amplitude des Sendesignals vorgegeben werden. Prinzipiell können der untere und der obere Schwellwert bereits in einer Entwicklungsphase der Fahrerassistenzeinrichtung vordefiniert und in einem Speicher abgelegt werden, wenn die Amplitude des Sendesignals bereits bekannt ist. Wird jedoch die Amplitude des Sendesignals im Betrieb des Kraftfahrzeugs variiert und/oder erst im Betrieb des Kraftfahrzeugs festgelegt, so kann auch vorgesehen sein, dass die beiden Schwellwerte situationsabhängig und bedarfsgerecht - im Betrieb - jeweils neu eingestellt werden, nämlich in Abhängigkeit von der jeweiligen Amplitude des Sendesignals. Es können somit stets höchst genaue Messungen erzielt werden.

Wie bereits ausgeführt, kann als irrelevantes Objekt eine Anhängerkupplung des Kraftfahrzeugs ausgeblendet werden. Die Anhängerkupplung befindet sich nämlich in der Regel hinter dem hinteren Stoßfänger und liegt somit im Erfassungsbereich der Ultraschallsensoren, die am Stoßfänger angebracht sind. Ganz allgemein kann als irrelevantes Objekt ein an dem Kraftfahrzeug fest angebrachtes Objekt ausgeblendet werden.

Also ist die Position des irrelevanten Objektes bezüglich des Sensors bekannt. Diese relative Position des irrelevanten Objektes kann genutzt werden, um das Zeitfenster zu definieren. Und zwar kann das Zeitfenster durch einen ersten Zeitpunkt nach dem Sendezeitpunkt sowie durch einen zweiten Zeitpunkt nach dem ersten Zeitpunkt definiert werden. Der erste und der zweite Zeitpunkt können derart bezüglich des Sendezeitpunkts vorgegeben werden, dass das Zeitfenster einem Entfernungsbereich entspricht, in welchem das irrelevante Objekt relativ zum Sensor liegt. Das Zeitfenster ist bevorzugt so definiert, dass die Zeitdauer zwischen dem Sendezeitpunkt und einem Zeitpunkt innerhalb des Zeitfensters einer Laufzeit des Signals vom Sensor bis zum Objekt und vom Objekt zurück zum Sensor entspricht. Auf diesem Wege kann das irrelevante Objekt zuverlässig ausgeblendet werden.

Eine erfindungsgemäße Fahrerassistenzeinrichtung für ein Kraftfahrzeug umfasst einen nach dem Echolaufzeitprinzip arbeitenden Sensor zum Senden eines Sendesignals zu einem Sendezeitpunkt und zum Empfangen eines Echos zu einem Empfangszeitpunkt, wie auch eine Signalverarbeitungseinheit, welche überprüft, ob der Empfangszeitpunkt innerhalb eines vorgegebenen Zeitfensters bezüglich des Sendezeitpunkts liegt. Die Signalverarbeitungseinheit überprüft außerdem, ob ein vorbestimmtes Kriterium bezüglich einer Amplitude des Echos erfüllt ist oder nicht. Die Signalverarbeitungseinheit interpretiert das empfangene Echo als zu einem irrelevanten Objekt gehörend, falls der Empfangszeitpunkt innerhalb des vorgegebenen Zeitfensters liegt und außerdem das Kriterium erfüllt ist.

Ein erfindungsgemäßes Kraftfahrzeug - insbesondere ein Personenkraftwagen - umfasst eine erfindungsgemäße Fahrerassistenzeinrichtung.

Die mit Bezug auf das erfindungsgemäße Verfahren vorgestellten bevorzugten Ausführungsformen und deren Vorteile gelten entsprechend für die erfindungsgemäße Fahrerassistenzeinrichtung bzw. das Fahrerassistenzsystem sowie für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels näher erläutert, wie auch unter Bezugnahme auf die beigefügten Zeichnungen.

Es zeigen:
- Fig. 1: in schematischer Darstellung ein Kraftfahrzeug gemäß dem Stand der Technik;
- Fig. 2: in schematischer Darstellung ein Kraftfahrzeug mit einer Fahrerassistenzeinrichtung gemäß einer Ausführungsform der Erfindung; und
- Fig. 3 und 4: jeweils einen beispielhaften Verlauf eines empfangenen Echos, wobei ein Verfahren gemäß einer Ausführungsform der Erfindung näher erläutert wird.

Ein Kraftfahrzeug 10 gemäß einer Ausführungsform der Erfindung, wie es in Fig. 2 dargestellt ist, beinhaltet eine Fahrerassistenzeinrichtung 11, welche zum Unterstützen des Fahrers des Kraftfahrzeugs 10 beim Parken ausgebildet ist. Die Fahrerassistenzeinrichtung 11 beinhaltet eine Vielzahl (im Ausführungsbeispiel vier) von Sensoren 12, 13, 14, 15, welche Ultraschallsensoren sind und am hinteren Stoßfänger des Kraftfahrzeugs 10 angebracht sind. Hinter dem Stoßfänger befindet sich außerdem eine Anhängerkupplung 16. Die Sensoren 12 bis 15 sind mit einer Signalverarbeitungseinheit 17 der Fahrerassistenzeinrichtung 11 gekoppelt. Die Signalverarbeitungseinheit 17 kann einen Mikrocontroller sowie einen digitalen Signalprozessor, wie auch einen Speicher beinhalten. Die Signalverarbeitungseinheit 17 empfängt Signale von den Sensoren 12 bis 15 und ermittelt Abstände zwischen dem Kraftfahrzeug 10 und fahrzeugexternen Hindernissen auf der Basis der empfangenen Signale. In Abhängigkeit von einem gemessenen Abstand kann die Signalverarbeitungseinheit 17 dann einen Lautsprecher 18 und/oder eine optische Anzeigeeinrichtung 19 ansteuern, etwa ein Display.

Die Fahrerassistenzeinrichtung 11 kann auch eine Vielzahl von Ultraschallsensoren 20 beinhalten, die am vorderen Stoßfänger angebracht sind. Das Interesse richtet sich vorliegend jedoch auf die hinteren Sensoren 12 bis 15, und zwar insbesondere auf die zwei mittleren Sensoren 13, 14, die benachbart zu der Anhängerkupplung 16 angeordnet sind. Ein Ziel ist es, das Echo der Anhängerkupplung 16 zuverlässig auszublenden, so dass dieses dem Fahrer nicht angezeigt wird. Die Anhängerkupplung 16 ist nämlich kein reales Hindernis, sondern ein irrelevantes Objekt, welches ausgeblendet werden soll.

Nachfolgend wird ein Verfahren gemäß einer Ausführungsform der Erfindung näher erläutert. Wenngleich sich das Verfahren auf den Betrieb des Ultraschallsensors 14 bezieht, können auch die anderen Sensoren 12, 13, 15 - und insbesondere der zweite mittlere Sensor 13 - auf die gleiche Art und Weise betrieben werden.

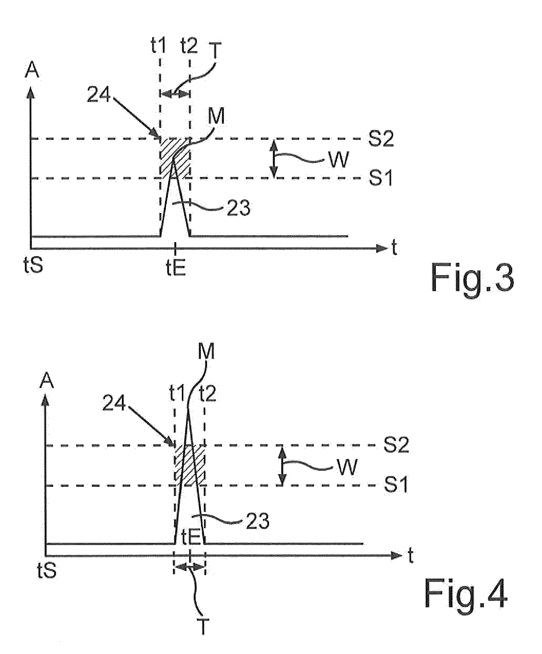

Der Sensor 14 sendet als Sendesignal einen Ultraschall, welcher von fahrzeugexternen Hindernissen reflektiert wird, etwa von einem Hindernis 21. Das Sendesignal wird also am Hindernis 21 reflektiert und vom Sensor 14 wieder empfangen, nämlich als Echo. Das Sendesignal reflektiert jedoch nicht nur an dem realen Hindernis 21, sondern auch an der Anhängerkupplung 16, die ein irrelevantes Objekt darstellt. Um die Anhängerkupplung 16 auszublenden und lediglich das Hindernis 21 dem Fahrer anzuzeigen, wird ein Entfernungsbereich 22 um den Sensor 14 herum definiert. Dieser Entfernungsbereich 22 hat die Form eines Kreisringes bzw. Kreisbogens, in dessen Zentrum sich der Sensor 14 befindet. Der Entfernungsbereich 22 ist so festgelegt, dass in diesen Entfernungsbereich 22 die Anhängerkupplung 16 fällt. Entsprechend dem Entfernungsbereich 22 wird ein Zeitfenster T definiert, und zwar bezüglich eines Sendezeitpunktes tS, zu welchem das jeweilige Sendesignal ausgesendet wird. In Fig. 3 ist dabei das vordefinierte Zeitfenster T dargestellt. Auf der x-Achse ist die Zeit t (bzw. die Entfernung vom Sensor 14) aufgetragen, während auf der y-Achse eine Amplitude A des empfangenen Echos aufgetragen ist. Die Signalverarbeitungseinheit 17 überprüft nun, ob ein Empfangszeitpunkt tE, zu welchem ein Maximum des Echos empfangen wird, innerhalb des vorgegebenen Zeitfensters T nach dem Sendezeitpunkt tS liegt oder nicht.

Das Zeitfenster T wird durch einen ersten Zeitpunkt t1 sowie durch einen zweiten Zeitpunkt t2 definiert, welche bezüglich des Sendezeitpunkts tS fest vorgegeben sind, nämlich entsprechend dem Entfernungsbereich 22.

Zusätzlich zu dem Zeitfenster T wird auch ein Wertebereich W vorgegeben, welcher durch einen unteren Schwellwert S1 sowie durch einen oberen Schwellwert S2 definiert wird. Der Wertebereich W wird so festgelegt, dass die Amplitude des Echos der Anhängerkupplung 16 innerhalb des Wertebereiches W liegt, also zwischen den Schwellwerten S1, S2.

Die Signalverarbeitungseinheit 17 überprüft, ob eine maximale Amplitude bzw. ein Maximum M eines empfangenen Echos 23 innerhalb einer Schnittmenge 24 liegt, welche einerseits durch das Zeitfenster T und andererseits auch durch den Wertebereich W definiert wird. Das empfangene Echo 23 wird dann als zu der Anhängerkupplung 16 gehörend interpretiert, wenn das Maximum M (also die maximale Amplitude) des Echos 23 innerhalb der Schnittmenge 24 liegt. Ist dies nicht der Fall, so wird das Echo 23 als zu dem realen Hindernis 21 gehörend interpretiert.

Wie in Fig. 3 dargestellt ist, fällt das Maximum M des empfangenen Echos 23 in die Schnittmenge 24. Einerseits fällt nämlich die maximale Amplitude A des Echos 23 in den vorgegebenen Wertebereich W; andererseits liegt auch der Empfangszeitpunkt tE des Echos 23 innerhalb des vorgegebenen Zeitfensters T. Dies bedeutet, dass das Echo 23 gemäß Fig. 3 zu der Anhängerkupplung 16 gehört, und nicht etwa zu dem realen Hindernis 21. Dieses Echo 23 wird dann ausgeblendet.

Demgegenüber besitzt das empfangene Echo 23 gemäß Fig. 4 ein Maximum M, welches außerhalb des Wertebereiches W liegt. Die maximale Amplitude A des Echos 23 ist nämlich größer als der obere Schwellwert S2. Obwohl der Empfangszeitpunkt tE innerhalb des Zeitfensters T liegt, wird dieses Echo 23 als zum realen Hindernis 21 gehörend interpretiert, und nicht zu der Anhängerkupplung 16. Dies bedeutet, dass das Hindernis 21 dem Fahrer angezeigt werden kann. Und zwar wird nun der Abstand zwischen dem Kraftfahrzeug 10 und dem Hindernis 21 gemessen, nämlich in Abhängigkeit von einer Laufzeit des Sendesignals, d. h. in Abhängigkeit von der Zeitdauer zwischen dem Sendezeitpunkt tS und dem Empfangszeitpunkt tE.

## Patentansprüche

1. Verfahren zum Ausblenden eines irrelevanten Objektes (16) beim Detektieren eines Hindernisses (21) mittels eines nach dem Echolaufzeitprinzip arbeitenden Sensors (12 bis 15) einer Fahrerassistenzeinrichtung (11) eines Kraftfahrzeugs (10), mit den Schritten:
- Senden eines Sendesignals durch den Sensor (12 bis 15) zu einem Sendezeitpunkt (tS),
- Empfangen eines Echos (23) durch den Sensor (12 bis 15) zu einem Empfangszeitpunkt (tE) und
- Überprüfen durch die Fahrerassistenzeinrichtung (11), ob der Empfangszeitpunkt (tE) innerhalb eines vorgegebenen Zeitfensters (T) bezüglich des Sendezeitpunkts (tS) liegt,
- Überprüfen durch die Fahrerassistenzeinrichtung (11), ob ein vorbestimmtes Kriterium bezüglich einer Amplitude (A) des Echos (23) erfüllt ist, und
- Interpretieren des Echos (23) als zu dem irrelevanten Objekt (16) gehörend, falls der Empfangszeitpunkt (tE) innerhalb des vorgegebenen Zeitfensters (T) liegt und das auf die Amplitude (A) bezogene Kriterium erfüllt ist **dadurch gekennzeichnet, dass**
als irrelevantes Objekt (16) eine Anhängerkupplung des Kraftfahrzeugs (10), ausgeblendet wird, wobei das Kriterium umfasst, dass ein Maximum (M) des Echos (23) innerhalb eines vorgegebenen Wertebereichs (W) liegt, welcher durch einen unteren Schwellwert (S1) größer null und einen oberen Schwellwert (S2) definiert wird.

2. Verfahren nach Anspruch 1,
**dadurch gekennzeichnet, dass**
als Empfangszeitpunkt (tE) ein Zeitpunkt des Empfangens eines Maximums (M) des Echos (23) definiert wird.

3. Verfahren nach Anspruch 2,
**dadurch gekennzeichnet, dass**
der untere Schwellwert (S1) und/oder der obere Schwellwert (S2) in Abhängigkeit von einer Amplitude (A) des Sendesignals definiert wird.

4. Verfahren nach einem der vorhergehenden Ansprüche, **dadurch gekennzeichnet, dass** der Wertebereich (W) so festgelegt wird, dass die Amplitude (A) des Echos (23) der Anhängerkupplung (16) innerhalb des Wertebereiches (W) liegt

5. Verfahren nach einem der vorhergehenden Ansprüche,
**dadurch gekennzeichnet, dass**
das Zeitfenster (T) durch einen ersten Zeitpunkt (t1) nach dem Sendezeitpunkt (tS) sowie durch einen zweiten Zeitpunkt (t2) nach dem ersten Zeitpunkt (t1) definiert wird, wobei der erste Zeitpunkt (t1) und der zweite Zeitpunkt (t2) derart vorgegeben werden, dass das Zeitfenster (T) einem Entfernungsbereich (22) entspricht, in welchem das irrelevante Objekt (16) relativ zum Sensor (12 bis 15) liegt.

6. Verfahren nach einem der vorhergehenden Ansprüche,
**dadurch gekennzeichnet, dass**
der Sensor (12 bis 15) ein Ultraschallsensor ist.

7. Verfahren nach einem der vorhergehenden Ansprüche,
**dadurch gekennzeichnet, dass**
die Fahrerassistenzeinrichtung (11) ein Parkhilfesystem ist.

8. Fahrerassistenzeinrichtung (11) für ein Kraftfahrzeug (10), mit einem nach dem Echolaufzeitprinzip arbeitenden Sensor (12 bis 15) zum Senden eines Sendesignals zu einem Sendezeitpunkt (tS) und zum Empfangen eines Echos (23) zu einem Empfangszeitpunkt (tE), und mit einer Signalverarbeitungseinheit (17) zum Überprüfen, ob der Empfangszeitpunkt (tE) innerhalb eines vorgegebenen Zeitfensters (T) bezüglich des Sendezeitpunkts (tS) liegt,
wobei
die Signalverarbeitungseinheit (17) dazu ausgelegt ist, zu überprüfen, ob ein vorbestimmtes Kriterium bezüglich einer Amplitude (A) des Echos (23) erfüllt ist, und das Echo (23) als zu einem irrelevanten Objekt (16) gehörend zu interpretieren, falls der Empfangszeitpunkt (tE) innerhalb des vorgegebenen Zeitfensters (T) liegt und das auf die Amplitude (A) bezogene Kriterium erfüllt ist **dadurch gekennzeichnet, dass** als irrelevantes Objekt (16) eine Anhängerkupplung des Kraftfahrzeugs (10), ausgeblendet wird, wobei das Kriterium umfasst, dass ein Maximum (M) des Echos (23) innerhalb eines vorgegebenen Wertebereichs (W) liegt, welcher durch einen unteren Schwellwert (S1) größer null und einen oberen Schwellwert (S2) definiert wird.

9. Kraftfahrzeug (10) mit einer Fahrerassistenzeinrichtung (11) nach Anspruch 8.

## Claims

1. Method for hiding an irrelevant object (16) when detecting an obstacle (21) by means of a sensor (12 to 15) operating according to the echo transit time principle in a driver assistance device (11) of a motor vehicle (10), having the following steps:
- the sensor (12 to 15) transmits a transmission signal at a transmission time (tS),
- the sensor (12 to 15) receives an echo (23) at a reception time (tE), and
- the driver assistance device (11) checks whether the reception time (tE) is within a predefined time window (T) with respect to the transmission time (tS),
- the driver assistance device (11) checks whether a predetermined criterion with respect to an amplitude (A) of the echo (23) has been satisfied, and
- the echo (23) is interpreted as belonging to the irrelevant object (16) if the reception time (tE) is within the predefined time window (T) and the criterion based on the amplitude (A) has been satisfied,
**characterized in that**
a trailer coupling of the motor vehicle (10) is hidden as the irrelevant object (16), the criterion comprising the fact that a maximum (M) of the echo (23) is within a predefined range of values (W) which is defined by a lower threshold value (S1) greater than zero and an upper threshold value (S2).

2. Method according to Claim 1,
**characterized in that**
a time at which a maximum (M) of the echo (23) is received is defined as the reception time (tE).

3. Method according to Claim 2,
**characterized in that**
the lower threshold value (S1) and/or the upper threshold value (S2) is/are defined on the basis of an amplitude (A) of the transmission signal.

4. Method according to one of the preceding claims,
**characterized in that** the range of values (W) is stipulated in such a manner that the amplitude (A) of the echo (23) of the trailer coupling (16) is within the range of values (W).

5. Method according to one of the preceding claims, **characterized in that**
the time window (T) is defined by a first time (t1) after the transmission time (tS) and by a second time (t2) after the first time (t1), the first time (t1) and the second time (t2) being predefined in such a manner that the time window (T) corresponds to a distance range (22) in which the irrelevant object (16) lies relative to the sensor (12 to 15).

6. Method according to one of the preceding claims,
**characterized in that**
the sensor (12 to 15) is an ultrasonic sensor.

7. Method according to one of the preceding claims,
**characterized in that**
the driver assistance device (11) is a parking assistance system.

8. Driver assistance device (11) for a motor vehicle (10), having a sensor (12 to 15) which operates according to the echo transit time principle and is intended to transmit a transmission signal at a transmission time (tS) and to receive an echo (23) at reception time (tE), and having a signal processing unit (17) for checking whether the reception time (tE) is within a predefined time window (T) with respect to the transmission time (tS),
the signal processing unit (17) being designed to check whether a predetermined criterion with respect to an amplitude (A) of the echo (23) has been satisfied and to interpret the echo (23) as belonging to an irrelevant object (16) if the reception time (tE) is within the predefined time window (T) and the criterion based on the amplitude (A) has been satisfied,
**characterized in that** a trailer coupling of the motor vehicle (10) is hidden as the irrelevant object (16), the criterion comprising the fact that a maximum (M) of the echo (23) is within a predefined range of values (W) which is defined by a lower threshold value (S1) greater than zero and an upper threshold value (S2).

9. Motor vehicle (10) having a driver assistance device (11) according to Claim 8.

## Revendications

1. Procédé de masquage d'un objet non pertinent (16) lors de la détection d'un obstacle (21) au moyen d'un capteur (12 à 15) fonctionnant selon le principe du temps de propagation d'échos d'un dispositif d'assistance au conducteur (11) d'un véhicule automobile (10), comprenant les étapes consistant à :
- émettre un signal d'émission au moyen du capteur (12 à 15) à un instant d'émission (tS),
- recevoir un écho (23) au moyen du capteur (12 à 15) à un instant de réception (tE), et
- vérifier au moyen du dispositif d'assistance au conducteur (11) si l'instant de réception (tE) se situe à l'intérieur d'une fenêtre temporelle prédéterminée (T) par rapport à l'instant d'émission (tS),
- vérifier au moyen du dispositif d'assistance au conducteur (11) si un critère prédéterminé est satisfait en ce que concerne une amplitude (A) de l'écho (23), et
- interpréter l'écho (23) comme appartenant à l'objet non pertinent (16) dans le cas où l'instant de réception (tE) se situe à l'intérieur de la fenêtre temporelle prédéterminée (T) et où le critère concernant l'amplitude (A) est satisfait,
**caractérisé en ce qu'**un attelage de remorque du véhicule automobile (10) est masqué comme étant un objet (16) non pertinent, dans lequel le critère comprend le fait qu'un maximum (M) de l'écho (23) se situe à l'intérieur d'un domaine de valeurs prédéterminé (W) qui est défini par une valeur de seuil inférieure (S1) supérieure à zéro et une valeur de seuil supérieure (S2).

2. Procédé selon la revendication 1,
**caractérisé en ce qu'**un instant de réception d'un maximum (M) de l'écho (23) est défini en tant qu'instant de réception (tE).

3. Procédé selon la revendication 2,
caractérisé en ce la valeur de seuil inférieure (S1) et/ou la valeur de seuil supérieure (S2) sont définies en fonction d'une amplitude (A) du signal d'émission.

4. Procédé selon l'une quelconque des revendications précédentes,
**caractérisé en ce que** le domaine de valeurs (W) est établi de manière à ce que l'amplitude (A) de l'écho (23) de l'attelage de remorque (16) se situe à l'intérieur du domaine de valeurs (W).

5. Procédé selon l'une quelconque des revendications précédentes,
**caractérisé en ce que** la fenêtre temporelle (T) est définie par un premier instant (t1) faisant suite à l'instant d'émission (tS) et par un second instant (t2) faisant suite au premier instant d'émission (t1), dans lequel le premier instant (t1) et le second instant (t2) sont prédéterminés de manière à ce que la fenêtre temporelle (T) corresponde à un domaine de distance (22) dans lequel l'objet (16) non pertinent se situe par rapport au capteur (12 à 15).

6. Procédé selon l'une quelconque des revendications précédentes,
**caractérisé en ce que** le capteur (12 à 15) est un capteur à ultrasons.

7. Procédé selon l'une quelconque des revendications précédentes,
**caractérisé en ce que** le dispositif d'assistance au conducteur (11) est un système d'aide au stationnement.

8. Dispositif d'assistance au conducteur (11) destiné à un véhicule automobile (10), comportant un capteur (12 à 15) fonctionnant selon le principe du temps de propagation d'échos, destiné à émettre un signal d'émission à un instant d'émission (tS) et à recevoir un écho (23) à un instant de réception (tE), et comportant une unité de traitement des signaux (17) destinée à vérifier si l'instant de réception (tE) se situe à l'intérieur d'une fenêtre temporelle prédéterminée (T) par rapport à l'instant d'émission (tS),
dans lequel l'unité de traitement des signaux (17) est conçue pour vérifier si un critère prédéterminé concernant une amplitude (A) de l'écho (23) est satisfait, et pour interpréter l'écho (23) comme appartenant à un objet (16) non pertinent dans le cas où l'instant de réception (tE) se situe à l'intérieur de la fenêtre temporelle prédéterminée (T) et où le critère concernant l'amplitude (A) est satisfait, **caractérisé en ce qu'**un attelage de remorque du véhicule automobile (10) est masqué comme étant un objet (16) non pertinent, dans lequel le critère comprend le fait qu'un maximum (M) de l'écho (23) se situe à l'intérieur d'un domaine de valeurs prédéterminé (W) qui est défini par une première valeur de seuil inférieure (S1) supérieure à zéro et une valeur de seuil supérieure (S2).

9. Véhicule automobile (10) comportant un dispositif d'assistance au conducteur (11) selon la revendication 8.
